(19)

**Europäisches Patentamt**
**European Patent Office**
**Office européen des brevets**

(11) **EP 4 645 251 A1**

(12) **EUROPEAN PATENT APPLICATION**

(43) Date of publication:
05.11.2025  Bulletin 2025/45

(21) Application number: 24173014.2

(22) Date of filing: **29.04.2024**

(51) International Patent Classification (IPC):
**G06V 10/764** (2022.01)     **G06N 3/0895** (2023.01)
**G06N 3/09** (2023.01)     **G06V 30/41** (2022.01)
**G06V 30/422** (2022.01)

(52) Cooperative Patent Classification (CPC):
**G06V 30/422; G06N 3/0895; G06N 3/09;**
**G06N 20/00; G06V 10/764; G06V 30/41**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventors:
• **VAIDYA, Nishtha**
**560100 Bangalore, Karnataka (IN)**
• **N, Madhusudanan**
**560036 Bangalore, Karnataka (IN)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND SYSTEM FOR AUTOMATED DIGITIZATION OF SCHEMATIC DIAGRAMS**

(57)     Disclosed is a method (100) and a system (200) for automated digitization of schematic diagrams. The method involves receiving a digital schematic diagram, processing it through the object detection model to extract symbols with preliminary classifications and positions, and displaying these for user review. User feedback, including corrections and identifications of inaccuracies, is utilized to quantify shifts in data distribution and retrain the model accordingly. The method leverages Population Stability Index (PSI) and Feature Stability Index (FSI) calculations to guide the retraining process and employs a recommendation engine to suggest model adaptation strategies based on the feedback and data shifts. The retrained model undergoes benchmarking to ensure performance improvements before deployment.

FIG 3

**Description**

The present invention relates to the field of computer vision and machine learning, particularly to methods and systems for the automated digitization of schematic diagrams, such as Piping and Instrumentation Diagrams (P&IDs), through the use of object detection models that are continuously improved via human-in-the-loop feedback mechanisms.

Piping and instrumentation diagrams (P&ID) are schematic representations of the processes and layout of equipment involved in the processes. For industries which existed in the predigitalization era, these P&IDs exist as legacy data, which is not necessarily in the digital form yet, i.e., the data for these assets cannot be successfully ingested into modern asset management and analytics solutions such as COMOS or PlantSight. Thus, digitalizing these diagrams is a necessary step towards automation and smart processing.

The conventional approach for digitalization of P&IDs is manual conversion. For example, a team of domain experts would process legacy P&IDs that are in either scanned or PDF format to extract the symbols, the interconnections between symbols, identify the corresponding elements in Computer Aided Plant/Process Planning tools and then draft them digitally. Such manual methods are labour-intensive processes which often take days per P&ID and a strong team of specialists, creating a bottleneck for doing digitalization at scale. Also, such manual processes may not always end up in standardized outputs and may be prone to human factors such as fatigue and errors.

Thus, automation of P&ID digitisation is a logical and exciting avenue where artificial intelligence can be utilised to hasten this process. A primary activity in the digitalization of legacy P&IDs is the extraction of symbols which represent these assets that carry out the processes in the industry. These assets are the main investment which need to be maintained and optimized as well as need to be tracked efficiently. Post symbol extraction, other downstream activities may be performed, resulting in a digital twin of the system after connecting these symbols through proper processes.

It has been found that data quality, good data preparation and model training practices are indispensable to train practically useful deep learning models, even for a limited set of symbols (where limited both in the number and representations of symbol). But this conventional mode of training and deploying models for symbol extraction is especially challenging to achieve using automated methods such as AI or Computer Vision, since there is a lack of standardisation of symbol representations.

Different companies have different representations of the symbols that represent the same asset. Further even for a single company, P&IDs drafted at different timelines have different visual variations such as shape, scale, detailing and stroke width for symbol representations. Note that while the human may perceive such symbols as similar, this is a wide variation as far as a computational representation is concerned. Thus, while these problems seem trivial to a human, these are bottlenecks for computer vision algorithms. Another key issue is that the frequency of occurrence as well as frequency of variations of these symbols in P&IDs vary for a given company and also across different companies. This creates a data imbalance problem for data driven methods that end up in biased models. There is also the issue of having multiple standards being followed by a company, or worse, no standard. Thus, it is difficult to define reference symbols to train computer vision models. Furthermore, another key issue is the representation of the P&ID, which is the raw data for the symbol extraction, which varies based on if it is a scanned P&ID or a P&ID which is in digital PDF, and the noise levels on these raw P&IDs.

The above issues are bottlenecks for symbol extraction using AI-based techniques like deep learning for computer vision. The issues affect the sample data quantity and quality that is available for learning, often due to which the deep learning assumption of identical and independent data distribution does not hold good and the variation across data from different sources makes it harder to use a generalised approach. Model stability cannot be achieved in such a case. This means tailoring the deep learning models for every company, for their specific use case.

The automation of the process of model fine tuning when scaling across different customers and different domains eventually gets stuck at the bottleneck due to poor representation of symbol in dataset of models as well as insufficient samples. Symbol extraction therefore becomes intractable and ends up needing efforts that are comparable to manual digitization efforts. Finally, artificial intelligence methods have inherent limitations due to which they may not entirely be accurate at all points.

Many of the above problems could be solved using human expertise. The presence of the human in the loop is a well acknowledged and utilized factor for document data extraction methods. Commercial tools that make use of this approach include Nanonets, AWS Sagemaker, but these do not update their models continuously. More recently, the Segment Anything model iterates between using a trained model and getting labels for newly collected data, but the task is limited to learning segmentations, which is an intermediate step for the current problem.

Active learning has also been used to make review intelligent and targeted. There has been prior work to utilize active learning for video and textual annotation and review. Active learning is primarily used to identify the most useful data points to review, but there is no context for triggering retraining in an automated manner. Often active learning is used for online learning to often minimize data hungriness of model or to solve low data regime issue like for the natural language task of named entity recognition or for image classification but it is not used to adapt to prior unseen domains or generalize to newer tasks especially with human in the loop, especially not in context of images or schematics.

Due to these challenges, finding a generalised and automated approach for symbol extraction using experts becomes a difficult task. There is no clear solution to involve the human experts in this process of interacting and improving the AI models with their feedback. There is a lack of standard frameworks to integrate the human with learning of the models in a continuous and seamless manner. Solving this problem requires smart design and architecture to counter the data infidelity and ensure model stability, ensure customer scalability and that offers a decent edge over manual approaches. This also requires integrating the human experts with learning and improvement process over the life of the model to achieve a good synergy.

The present invention seeks to address the issues of data variability and model stability and provide a synergistic collaboration between human expertise and AI capabilities, ensuring scalable, accurate, and efficient digitization of P&IDs. The present invention provides an automated method that leverages continuous model improvement through expert feedback for the digitalization of industrial legacy data.

The object of the present invention is achieved by a method for automated digitization of schematic diagrams. The method comprises receiving a schematic diagram in a digital format. Herein, the schematic diagram comprises a plurality of schematic symbols. The method further comprises processing the schematic diagram using an object detection model to extract a set of extracted schematic symbols. Each extracted schematic symbol is assigned a preliminary classification and a preliminary position in the schematic diagram by the object detection model. The object detection model is trained on an initial training dataset. The initial training dataset comprises annotated schematic symbols. Each annotated schematic symbol is associated with a classification indicative of function of the annotated schematic symbol within a schematic diagram. The method further comprises displaying, via a user interface, the extracted schematic symbols overlaid on the schematic diagram. The preliminary classifications and the preliminary positions of the extracted schematic symbols are visually indicated for user review. The method further comprises receiving user feedback on the extracted schematic symbols via the user interface. The user feedback comprises corrections to the preliminary classifications, adjustments to the preliminary positions, identifications of incorrectly detected schematic symbols, deletions of symbol not in scope, and identifications of undetected schematic symbols by the object detection model. The method further comprises analysing the user feedback to quantify shift in data distribution compared to the initial training dataset. The method further comprises retraining the object detection model based on the user feedback and the shift in data distribution. The method further comprises implementing the retrained object detection for digitization of schematic diagrams.

In one or more embodiments, the step of analysing the user feedback to quantify shift in data distribution compared to the initial training dataset comprises computing at least one of Population Stability Index (PSI) and Feature Stability Index (FSI) to characterize the shift in data distribution.

In one or more embodiments, the step of retraining the object detection model comprises complete retraining of the object detection model in response to a decrease in PSI, indicating substantial divergence from the initial training dataset.

In one or more embodiments, the step of retraining the object detection model comprises retraining of one or more of last layers of the object detection model in response to a change in FSI, indicating user corrections of the classifications of detected symbols as compared to the initial training dataset.

In one or more embodiments, the step of retraining the object detection model comprises selective fine-tuning of nodes or layers within the object detection model in response to a decrease in FSI, indicating localized shifts in the initial training dataset.

In one or more embodiments, the step of retraining the object detection model comprises implementing meta-learning techniques, including at least one of model-based meta-learning, optimization-based learning, or metric-based learning, for tuning of the object detection model in response to a decrease in PSI, indicating presence of new schematic symbols as compared to the initial training dataset.

In one or more embodiments, the method also comprises benchmarking performance of the re-trained object detection model against a predefined standard model, to generate benchmarking results. The method further comprises presenting, via the user interface, the benchmarking results for user approval to deploy the re-trained object detection model.

In one or more embodiments, the user interface is configured to support multiple types of user feedback, including deletion of incorrect schematic symbols, correction of categories of schematic symbols, correction of positions of schematic symbols, and addition of missed schematic symbols.

The object of the present invention is also achieved by a system comprising one or more processing units and a memory unit communicatively coupled to the one or more processing units. Herein, the memory unit comprises an object detection model training module stored in the form of machine-readable instructions executable by the one or more processing units, wherein the object detection model training module is configured to perform aforementioned method steps for automated digitization of schematic diagrams.

The object of the present invention is further achieved by a computer program product, having machine-readable instructions stored therein, that when executed by the one or more processing units, cause the one or more processing units to perform aforementioned method steps.

Still, other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:

FIG 1 is a flowchart of a method for automated digitization of schematic diagrams, in accordance with one or more embodiments of the present invention;

FIG 2 is a block diagram representation of a system for automated digitization of schematic diagrams, in accordance with one or more embodiments of the present invention; and

FIG 3 is a flow diagram of a process for automated digitization of schematic diagrams, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for automated digitization of schematic diagrams are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

As used herein, schematic diagrams are graphical representations that employ schematic symbols to illustrate the layout and function of components within a system, such as pipelines, valves, instruments, and control devices in industrial processes. For purposes of the present disclosure, the schematic diagrams specifically refers to Piping and Instrumentation Diagrams (P&IDs) and similar types of technical drawings that detail the interconnections and interactions between various elements in industrial settings. These diagrams are used in industries for understanding, operating, and maintaining complex systems. Herein, the term "schematic symbols" are standardized graphical representations used in the schematic diagrams to denote specific components, devices, or functions within a system. Each symbol is associated with a particular element (e.g., a pump, valve, sensor) and is designed to convey specific information about the element's role and characteristics in the system. It may be appreciated that although the present disclosure has been primarily described in terms of P&IDs, the teachings of the present disclosure may be applied to any type of engineering diagrams without any limitations.

The automated digitization, within the framework of the present invention, refers to the process of converting schematic diagrams from formats such as paper-based, scanned images, or PDFs into a structured digital format. The digital format is the electronic representation of schematic diagrams and their constituent schematic symbols in a structured and machine-readable form. This format facilitates the integration of the digitized data into modern asset management and analytics solutions, allowing for advanced processing, visualization, and interpretation. Such transition to the digital format helps in transforming legacy industrial documentation into valuable digital assets that can be efficiently accessed, analyzed, and utilized in various applications.

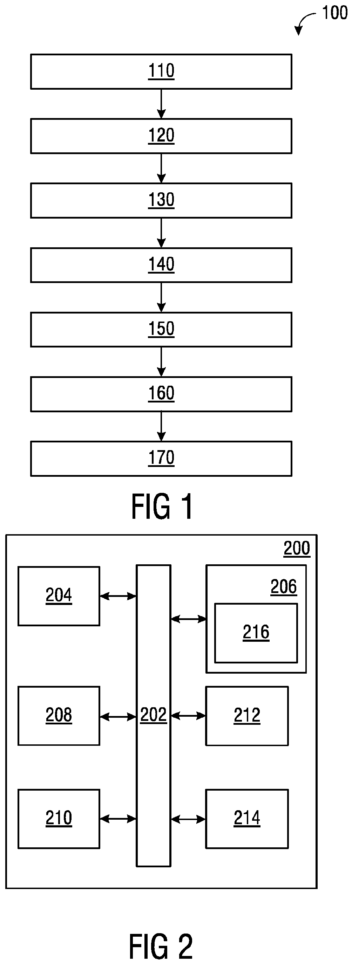

Referring to FIG 1, illustrated is a flowchart of a method (as represented by reference numeral 100) for automated digitization of schematic diagrams, in accordance with an embodiment of the present invention. The method 100 transforms schematic diagrams from traditional formats into structured digital representations. This transformation is achieved using machine learning model to recognize and interpret various symbols within the schematic diagrams, accurately capturing their classifications and spatial arrangements. The method 100 incorporates human expertise in refining and enhancing the machine learning model. Through iterative feedback and continuous learning, the method 100 adapts to variations and complexities inherent in schematic diagrams, ensuring a high degree of precision and reliability in the digitized outputs.

Referring to FIG 2, illustrated is a block diagram of a system 200 for automated digitization of schematic diagrams, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for automated digitization of schematic diagrams. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or nonvolatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like, without any limitations.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for automated digitization of schematic diagrams. In particular, the memory unit 206 includes an object detection model training module 216 to perform steps for the said purpose.

Referring to FIGS 1-2 in combination, various steps of the method 100 (as described hereinafter), which may be executed in the system 200, or specifically in the processing unit 204 of the system 200, for automated digitization of schematic diagrams, are described. It may be appreciated that although the method 100 is illustrated and described as a sequence of steps, it may be contemplated that various embodiments of the method 100 may be performed in any order or different combinations, and need not include all of the illustrated steps.

At step 110, the method 100 includes receiving a schematic diagram in a digital format, wherein the schematic diagram comprises a plurality of schematic symbols. The schematic diagram in the digital format may originate from various sources, including but not limited to scanned images of paper-based diagrams, digital drawings, or PDF files. These diagrams are typically used in industries for representing the layout and interconnections of various components, such as pipelines, valves, and instruments in a processing plant. As discussed, each schematic symbol represents a distinct element or function within the schematic diagram. The schematic symbols within these diagrams are standardized graphical notations that denote specific components or functions, adhering to industry norms or company-specific standards. The digital format of the schematic diagram ensures that the data is in a form that can be processed by computational means, facilitating the subsequent steps of automated analysis and digitization.

At step 120, the method 100 includes processing the schematic diagram using an object detection model to extract a set of extracted schematic symbols, wherein each extracted schematic symbol is assigned a preliminary classification and a preliminary position in the schematic diagram by the object detection model, wherein the object detection model is trained on an initial training dataset, the initial training dataset comprising annotated schematic symbols, wherein each annotated schematic symbol is associated with a classification indicative of function of the annotated schematic symbol within a schematic diagram. The object detection model within the framework of present invention refers to a machine learning model specifically trained to identify and locate schematic symbols within a schematic diagram. The object detection model may employ algorithms that analyse visual data to detect patterns corresponding to various schematic symbols, differentiating them based on learned characteristics from training data. The function of the object detection model is to process schematic diagrams in digital formats, extract schematic symbols from these diagrams, and assign preliminary classifications and positions to these schematic symbols based on training thereof.

The object detection model is trained on the initial training dataset which comprises a diverse collection of annotated schematic symbols, each representing a specific element typically found in schematic diagrams, such as those used in industrial process documentation. The initial training dataset is characterized by its annotated nature, where each schematic symbol is labelled with relevant information that aids in training of the object detection model. It may be understood that the annotated schematic symbols are the individual elements within the initial training dataset that have been explicitly labelled with additional information to facilitate the training of the object detection model. These annotations may include visual identifiers of the symbols and their associated classifications. The annotated schematic symbols serve as examples for the object detection model to learn from, enabling it to recognize and interpret similar symbols in new schematic diagrams. Further, each annotated schematic symbol within the initial training dataset is associated with a classification that is indicative of its function within the schematic diagram. This classification provides context to the object detection model, linking the visual appearance of a symbol to its operational role or purpose in the diagram. In present examples, the object detection model may initially be trained with annotated data or synthetic data using object detection models, such as EfficientDet, Yolo.

In the present method, the object detection model is configured to scan the schematic diagram, as provided in the digital format, to identify and extract a set of schematic symbols present in the schematic diagram based on its training. Subsequently, the object detection model proceeds to assign the preliminary classification and the preliminary position to each extracted symbol within the schematic diagram. The preliminary classification serves as an initial hypothesis by the object detection model regarding the function or role of the extracted schematic symbol within overall process of the schematic diagram. The preliminary position, on the other hand, defines a location on the schematic diagram for each extracted schematic symbol, capturing its spatial relationship with other symbols and elements within the schematic diagram. The assignment of the preliminary classification and the preliminary position allows for understanding the interconnections and interactions between various components represented by the schematic symbols.

At step 130, the method 100 includes displaying, via a user interface, the extracted schematic symbols overlaid on the schematic diagram, wherein the preliminary classifications and the preliminary positions of the extracted schematic symbols are visually indicated for user review. That is, subsequent to the extraction and preliminary classification and positioning of schematic symbols by the object detection model, the extracted schematic symbols are presented to the user for review. The user interface serves as a visual platform where each of the extracted schematic symbols, identified and processed by the object detection model, is superimposed back onto the original schematic diagram. This overlay is arranged so that each schematic symbol is positioned according to the preliminary position assigned by the object detection model, ensuring that the spatial context and relationship of the schematic symbols within the diagram are retained for review.

Further, the user interface may highlight the preliminary classifications assigned to each of the extracted schematic symbols by the object detection model. These classifications are visually indicated alongside the schematic symbols, providing the user with immediate insight into interpretation of the object detection model of function or role of each schematic symbol within the schematic diagram. This visual indication could be in the form of labels, colour codes, or other graphical annotations that make it intuitive for the user to understand the preliminary classifications. The presentation of the extracted schematic symbols, along with their preliminary classifications and positions, on the user interface is designed to facilitate a comprehensive review process by the user. This process allows the user to verify the accuracy of extractions and classifications by the object detection model, and to identify any discrepancies, errors, or omissions.

In some implementations, an active learning component is introduced to enhance the efficiency of the user review process. This component systematically prioritizes the extracted schematic symbols that require review by a human expert. The prioritization is based on various criteria, including but not limited to, the confidence levels assigned by the object detection model to each extracted symbol. The active learning component evaluates the confidence scores associated with each symbol's extraction and preliminary classification. Symbols for which the object detection model exhibits lower confidence levels are deemed to have a higher likelihood of inaccuracies in their extraction or classification. These symbols are therefore prioritized for review, such that human expertise can provide critical corrections and insights that would significantly contribute to the refinement of the object detection model. Furthermore, in some cases, a filtering mechanism is applied to the priority list generated by the active learning component. This filtering mechanism can be configured to include only those symbols that fall below a predefined model confidence threshold. The threshold is set based on a desired balance between review workload and accuracy enhancement. By focusing human expert review on symbols with confidence scores below this threshold, expert time and effort are optimally utilized.

At step 140, the method 100 includes receiving user feedback on the extracted schematic symbols via the user interface, wherein the user feedback comprises corrections to the preliminary classifications, adjustments to the preliminary positions, identifications of incorrectly detected schematic symbols, deletions of symbol not in scope, and identifications of undetected schematic symbols by the object detection model. That is, following the display of extracted schematic symbols overlaid on the schematic diagram via the user interface, user feedback is received on the displayed schematic symbols vis-à-vis the schematic diagram. This feedback mechanism, facilitated through the user interface, is designed to capture a range of inputs from the user, directly addressing the preliminary outcomes of the object detection model.

Users may review and correct the preliminary classifications assigned to each extracted schematic symbol by the object detection model by rectifying any inaccuracies in interpretation of functions or roles of the corresponding schematic symbol within the schematic diagram by the object detection model. Users may adjust the preliminary positions of the extracted schematic symbols as determined by the object detection model. This adjustment ensures the spatial coherence of the schematic symbols within the schematic diagram, maintaining the accurate representation of the physical or logical relationships among the components depicted. Furthermore, users may identify instances where the object detection model might have incorrectly detected a feature or artifact as a schematic symbol. This type of feedback helps in distinguishing genuine schematic symbols from miscellaneous elements or noise that may be present in the schematic diagram (e.g., due to its scan quality or the like). Additionally, users may identify false detections where non-symbol elements are mistakenly recognized as schematic symbols by the object detection model. Addressing these false positives helps in refining precision of the object detection model and ensuring that only valid symbols are extracted and processed. Furthermore, users may identify undetected schematic symbols, where the object detection model may have failed to recognize a schematic symbol present in the schematic diagram. This feedback is particularly valuable as it highlights potential gaps in the object detection model.

For purposes of the present invention, the user interface is configured to support multiple types of user feedback, including deletion of incorrect schematic symbols, correction of categories of schematic symbols, correction of positions of schematic symbols, and addition of missed schematic symbols. To enable the deletion of incorrect schematic symbols, the user interface may incorporate functionalities such as select and delete tools, where users can simply click on an erroneously identified symbol and remove it from the schematic diagram. This action is crucial for eliminating false positives-elements that the object detection model mistakenly identified as schematic symbols. For the correction of categories of schematic symbols, the user interface likely includes drop-down menus or selection lists adjacent to each symbol, displaying the current category assigned by the object detection model. Users can review these preliminary classifications and, where inaccuracies are found, select the correct category from a list of available classifications. The correction of positions of schematic symbols may be facilitated by drag-and-drop features within the user interface, enabling users to reposition symbols to their correct locations within the diagram. To address the addition of missed schematic symbols, the user interface may provide a symbol palette from which users can select the appropriate symbols to add to the schematic diagram. This process may involve choosing a schematic symbol from the palette, placing it in the desired location on the schematic diagram, and then specifying its category or classification.

Such aggregation of user feedback through the user interface forms a comprehensive dataset that reflects the user's expertise. This dataset is subsequently utilized to refine and update the object detection model, addressing the identified inaccuracies, errors, and omissions. By incorporating user feedback, the object detection model is continuously improved, enhancing its ability to accurately extract, classify, and position schematic symbols in future processing tasks, as discussed in more detail in the proceeding paragraphs.

At step 150, the method 100 includes analysing the user feedback to quantify shift in data distribution compared to the initial training dataset. That is, after the user feedback has been received via the user interface regarding the extracted schematic symbols, a subsequent step involves analysing this feedback to determine shifts in data distribution relative to the initial training dataset on which the object detection model was trained. This analysis helps in understanding how the real-world schematic diagrams, as represented by the user-reviewed diagrams, diverge from the scenarios captured within the initial training dataset set. This process involves examination of the user feedback, which includes corrections to the preliminary classifications and positions of schematic symbols, deletions of incorrectly identified symbols, deletions of symbol not in scope, and additions of previously undetected symbols. Each of these feedback types provides insights into potential variances in the characteristics of schematic symbols within the schematic diagrams being processed compared to those within the initial training dataset.

Such analysis is utilized to quantify the shift in data distribution, objectively measuring a degree to which the real-world data (i.e., the schematic diagrams being processed and reviewed by users) differs from the scenarios the object detection model was initially trained to recognize using the initial training dataset. This quantification can be achieved through various statistical and machine learning techniques that assess the variance in symbol representations, frequencies, and classifications between the user-reviewed diagrams and the initial training dataset. By quantifying these shifts in data distribution, insights into the limitations and potential areas of improvement for the object detection model may be gained, and further be used in retraining or refinement processes, ensuring that the object detection model is continuously updated to better reflect the characteristics and variances found in real-world schematic diagrams.

In the present embodiments, the step of analysing the user feedback to quantify shift in data distribution compared to the initial training dataset comprises computing at least one of Population Stability Index (PSI) and Feature Stability Index (FSI) to characterize the shift in data distribution. The data shift refers to variations in the distribution of the inference data, which the object detection model encounters during its application on new schematic diagrams, as compared to the distribution characteristics of the initial training dataset on which the model was trained. These metrics (PSI and FSI),as part of model stability index , are utilized in characterizing the nature and extent of the shift in data distribution, providing insights into ability of the object detection model to maintain its performance across differing data sets.

The Population Stability Index (PSI) focuses on the macroscopic changes in the population distribution concerning predicted variables of the object detection model. The PSI aims to quantify how the distribution of the population, represented by the schematic diagrams, has shifted from the distribution represented in the initial training dataset. The PSI is calculated using a formula that assesses the percentage change in distribution across specified intervals or bins, as given below. A PSI value below 0.1 indicates negligible change, suggesting the model remains suitable without modifications. A PSI between 0.1 and 0.2 signals a moderate change, warranting an evaluation of potential impacts on performance of the model. A PSI of 0.2 or higher denotes significant changes, necessitating a retraining or possibly a redesign of the model to adapt to the new data distribution.

$$PSI = \sum \left( \%initial - \%new \cdot ln\frac{\%initial}{\%new} \right)$$

In instances where the PSI indicates moderate changes, the Feature Stability Index (FSI) provides a more granular analysis by examining the stability or variability of individual features within the data. The FSI employs a similar calculation to the PSI but focuses on the distribution shifts of specific features, such as the attributes of schematic symbols as identified and classified by the model. This detailed analysis helps in determining the exact features contributing to the overall data shift, enabling targeted recalibration or restructuring of the object detection model to address these changes effectively.

At step 160, the method 100 includes retraining the object detection model based on the user feedback and the shift in data distribution. The retraining of the object detection model is taken as a direct response to the insights gained from user feedback and the observed shift in data distribution. This retraining process is integral adaptive learning loop, ensuring that the object detection model is updated. As discussed, a range of user feedback is captured providing information on the accuracy and efficacy of current performance of the object detection model, and highlighting areas where detection and classification capabilities of the object detection model may not be sufficient. Concurrently, the system assesses the shift in data distribution, as characterized by changes in metrics such as PSI and FSI.

The retraining of the object detection model involves integrating the new insights provided by the user feedback. The retraining includes adjusting one or more of parameters, weights, and architecture of the object detection model to better align with the current data characteristics and user-identified corrections. This may involve incorporating new schematic symbols into the training dataset, refining classification logic based on corrected categories, or enhancing spatial recognition capabilities of the object detection model to improve the accuracy of positioning of schematic symbols.

In an embodiment, the step of retraining the object detection model comprises complete retraining of the object detection model in response to a decrease in PSI, indicating substantial divergence from the initial training dataset. Herein, the decrease in PSI is indicative of a substantial divergence in the characteristics of the data the model is processing, namely the schematic diagrams and their constituent schematic symbols, from the data characteristics covered within the initial training dataset. When the PSI falls below a certain threshold, it signals that the differences between the new data and the initial training dataset represent significant changes in the types of schematic symbols, their representations, or possibly the introduction of entirely new symbols that were not part of the initial training set. Such substantial shifts can compromise the accuracy and efficacy of the object detection model, as existing parameters may no longer be adequate to accurately identify and classify the schematic symbols in the new data set.

In response to this divergence, as quantified by the PSI, complete retraining of the object detection model is required. This retraining process includes revisiting the entirety of the object detection model, including its layers, nodes, and the weights assigned during the initial training process. Such complete retraining is aimed at recalibrating parameters of the object detection model to align with the shifted data characteristics. The complete retraining of the object detection model involves the introduction of new training data that better represents the current characteristics of the schematic diagrams being processed. This may include the integration of schematic symbols and diagrams that were part of the user feedback, particularly those symbols or symbol representations that contributed to the decrease in PSI. By incorporating these elements into the training set, the retrained model is better equipped to recognize and accurately classify the schematic symbols in the diagrams, accounting for the observed shifts in data distribution.

In an embodiment, the step of retraining the object detection model comprises retraining of one or more of last layers of the object detection model in response to a change in FSI, indicating user corrections of the classifications of detected symbols as compared to the initial training dataset. As discussed, the FSI serves as a measure of how individual features, or characteristics, of the schematic symbols have shifted in the data being analyzed by the object detection model, relative to those same features in the initial training dataset. Herein, the change in FSI indicates that the users, through their feedback, have identified discrepancies in the way the object detection model classifies certain schematic symbols.

In response to this divergence, as quantified by the FSI, a targeted retraining of the object detection model, specifically focusing on one or more of its last layers, is carried out. The rationale for concentrating the retraining effort on final layers lies in the architectural design of many deep learning models, where these layers are primarily responsible for classification tasks. Adjusting the parameters, weights, or structures of these layers can significantly enhance ability of the object detection model to refine its classification outputs. The retraining process involves the utilization of a modified training dataset, specifically including the corrected classifications provided by the users. This dataset enables the object detection model to learn from the discrepancies identified in its previous classifications and to adjust its classification mechanisms accordingly. Such focus on retraining the last layers allows for a more efficient adaptation of the object detection model.

In an embodiment, the step of retraining the object detection model comprises selective fine-tuning of nodes or layers within the object detection model in response to a decrease in FSI, indicating localized shifts in the initial training dataset. Herein, the decrease in FSI indicates that certain features or aspects of the schematic symbols, as encountered in the new data set, have shifted from those represented in the initial training dataset. These shifts are localized, meaning they represent minor variances that may affect ability of the object detection model to accurately classify or identify certain schematic symbols.

In response to these localized shifts, selective fine-tuning of the object detection model may be implemented. This process involves identifying and adjusting specific nodes or layers within the object detection model that are most closely associated with the features or characteristics that have exhibited variance. The selection of nodes or layers for fine-tuning is based on an analysis of architecture of the object detection model and the nature of the shifts detected through the decrease in FSI. By focusing on specific nodes or layers, the fine-tuning process can effectively address the localized discrepancies without necessitating a complete re-training of the object detection model.

In an embodiment, the step of retraining the object detection model comprises implementing meta-learning techniques, including at least one of model-based meta-learning, optimization-based learning, or metric-based learning, for tuning of the object detection model in response to a decrease in PSI, indicating presence of new schematic symbols as compared to the initial training dataset. Herein, the decrease in PSI points to a significant shift in the data landscape, which may be due to appearance of schematic symbols that the object detection model has not previously encountered. In such case, the retraining step for the object detection model incorporates meta-learning techniques. Meta-learning, often referred to as "learning to learn," provides a framework for adapting the object detection model to new data distributions and symbol representations efficiently. Meta-learning techniques are employed to tune the object detection model, enabling it to rapidly assimilate information about new schematic symbols for detection and classification processes.

The model-based meta-learning approach involves training a meta-model that can quickly adapt to new tasks or data distributions with minimal additional training. In the context of the object detection model, a model-based meta-learning technique may include developing a meta-model that learns the general principles of symbol detection and classification, which can then be quickly fine-tuned to recognize new schematic symbols introduced in the data. Optimization-based meta-learning focuses on adjusting the learning algorithm itself, modifying the optimization process to enable rapid adaptation to new data. This may involve developing adaptive learning rates or optimization strategies that allow the object detection model to quickly adjust its parameters in response to the detection of previously unseen schematic symbols, enhancing its ability to learn from limited examples of the new symbols. Metric-based meta-learning techniques are based on learning distance metrics or similarity measures that can be used to compare and classify data points. This may involve establishing similarity measures that enable the object detection model to effectively group and classify new schematic symbols based on their similarities to known symbols, even when the quantity of data for the new symbols is limited.

Implementing these meta-learning techniques in the retraining of the object detection model ensures that the object detection model remains flexible and responsive to the dynamic nature of schematic diagrams, particularly in environments where new types of symbols may frequently emerge. By employing meta-learning, the object detection model may be re-trained to rapidly integrate knowledge about new schematic symbols, thereby maintaining effectiveness and accuracy of object detection model in case of evolving data environments.

Table 1 (below) characterizes the shift in data distribution by mapping user actions to an information index.

Table 1. Mapping user actions to the information index of systems

| User Feedback (on a review screen) | Explanation | Machine Learning Interpretation | Data change interpretation |
|---|---|---|---|
| The user sees that a symbol has been detected and agrees with the detected symbol's location and class of symbol | Nothing to be done here. | Reinforces the correctness of the current model's accuracy. Could be either used as a positive example, or ignored for retraining | PSI/FSI increases |
| The user sees that a symbol has been detected and does not agree with the detected symbol's location - so corrects it | The location of the bounding box is modified, but the symbol detection is still good overall. | This amounts to a change in a subset of features that the model originally learned from. A fine adjustment to decision boundaries of the ML model is needed, though most of the features are good. | Decrease in FSI |
| The user sees that a symbol has been detected and does not agree with the detected symbol's class and proceeds to correct it | The localizatio n of the detection model is good, but classificat ion is not good enough. | Potentially relates to the last few layers of the DL model, though it could affect the earlier layers too. Most likely that this may not be as fine an adjustment as compared to the previous case. | Substantial Decrease in FSI |

(continued)

| User Feedback (on a review screen) | Explanation | Machine Learning Interpretation | Data change interpretation |
|---|---|---|---|
| The user sees that a symbol has not been detected and wants to add an entry for the symbol by specifying a bounding box and class of symbol | The detection model does not have sufficient feature information to learn the presence of the symbol | Would need a comprehensive re-training to not only learn from the features for this class but also to adjust the decision boundaries for all other classes. More comprehensive and needs more samples. | Small decrease in PSI |
| The user realises that the symbol to be detected is not even available in the symbol library. Reviewer must extend symbol library, mark the symbol location and assign newly created class to that symbol. | Would add more classes to classify into. | Model architecture might change (the last few layers in case of neural network architectures) . | Decrease in PSI |
| The user realizes that the detected object is not even a symbol at all. Reviewer must delete the bounding box and hence the entire entry. | This is a false positive which must be included as a negative example for retraining. | Would need to be included in re-training data and decision boundaries are to be adjusted. | Decrease in FSI |
| Domain changes e.g. from P&ID to E&IC - the class of symbol as well as bounding box is incorrect/missing | The detection model has poor/ no information of the features as it is never exposed to these kinds of symbols | Model architecture could be same to begin with but needs extensive re-training | Large decrease in PSI |

It may be understood that machine learning (ML) systems are built on the premise that the inference data will have same distribution as the data which was used to train the system. This assumption is often intractable when such systems are used in practice. This is because in real life the data samples can shift in distribution. When the inference distribution diverges from the training data distribution the model becomes unstable. Therefore, for the ML models to be robust, not only does the system need to learn on the fly and continuously, but it also needs to adapt to this data shift intelligently. The present invention proposes an approach where first the data shift is quantified in terms of the model stability index and then mapped to the expected type and value information gain. This information gain type and value is mapped intelligently to the model training and learning approach, as based on the type of the data shift the model might have to undergo complete finetuning at one end of the spectrum or just fine tuning if the data shift is insignificant.

The nature of change in PSI/FSI and the history of user interactions is mapped to the strategy of training in Table 2 (below). Herein, the history of user interactions is captured by inferencing a variable of user preference in features of training strategy (cost, time, etc.) for the object detection model. As discussed, once it has been determined that the model is unstable and nature of information based on model stability index, next step is to improve the model which can range from recalibration, model retraining or changing model architecture completely. This decision is complex and therefore a recommendation engine is used that utilises the model stability index to make this decision. This decision is often non-trivial and may depend on the other characteristics of interaction like the compute power, time resource, involvement of an expert or other things as right time for scheduling. This is a complex decision which often requires an AI expert, so in industrial application it is challenging to make such a decision iteratively for a system in production. Therefore, a heuristics based method is proposed to recommend strategy for model improvement (stabilisation) as mentioned in Table 2.

Table 2. Mapping information gain to model training and training strategy

| Method | | Pros | Cons | When to use (PSI, FSI) |
|---|---|---|---|---|
| Model retra ining / Fine tunin g | Complete re-training | Comprehensiv e | 1. Lot of data<br>2. Lot of time | Large decrease in PSI |
| | Retraining last few layers | | 3. Human supervised hyperparameter tuning | Small/ large decrease in FSI |
| | Selective update of nodes/layer s | Takes lesser time | 1. Might lead to overfitting or missed features<br>2. Low convergence guarantees<br>3. Need ablation experiments to determine the contributing nodes/layer | Small decrease in FSI |
| Meta learn ing | Model-based meta-learning (e.g., Fast weights/Neu ral Turing Machine/ Memory Augmented NN) | Rapid generalizati on across tasks. | 1. Requires entire distribution of the data therefore external memory storage - can use LRU cache for more efficient performance<br>2. Difficult to estimate the computational resource required - though we can put some hard stops<br><br>3. Is not model agnostic | Large decrease in PSI |
| | Optimisatio n based (e.g., LSTM-based, Model Agnostic ML) | 1. Requires Deeper networks<br><br>2. Model agnostic | Difficult to estimate the computational resource required - though we can put some hard stops | Large decrease in PSI |
| | Metric based (e.g., convolution al Siamese networks) | 1. Depends on assumption that task is similar and fails otherwise.<br>2. Needs kernel function to be predetermined | 1. Difficult to estimate the computational resource required - though we can put some hard stops<br><br><br>2. Not model agnostic | Large decrease in PSI |

At step 170, the method 100 includes implementing the retrained object detection for digitization of schematic diagrams. That is, upon the completion of retraining the object detection model, the retrained model is implemented for the digitization of schematic diagrams such that the improved capabilities of the retrained object detection model are put into operational use. The retrained object detection model, now updated with corrections and enhancements derived from user feedback and data shift analyses, is employed to process new schematic diagrams. The implementation of the retrained object detection model in the digitization process is an iterative procedure. The system continues to leverage the active learning component to further refine performance of the object detection model over time.

In some implementations, the method 100 also includes benchmarking performance of the re-trained object detection model against a predefined standard model, to generate benchmarking results. That is, following the retraining of the object detection model, a benchmarking phase is initiated to assess the performance of the model against a predefined standard. This standard is typically established based on historical performance metrics or gold-standard schematics that are annotated and represent the ideal or target performance levels for the object detection model. This analysis focuses on various performance metrics, such as accuracy in symbol detection and classification, precision in symbol positioning, and the model's overall ability to correctly interpret schematic diagrams. The method 100 further includes presenting, via the user interface, the benchmarking results for user approval to deploy the re-trained object detection model. That is, once the performance benchmarking is complete and the results are compiled, these results are presented to the user via the user interface. The user interface allows the user to review the benchmarking results and make an informed decision on whether to approve the deployment of the retrained object detection model. If the benchmarking results indicate that the retrained model meets or exceeds the predefined performance standards, the user can approve its deployment for operational use in the digitization of schematic diagrams. If the results suggest that further improvements are needed, the user has the option to withhold approval and, if necessary, initiate additional rounds of feedback collection and model retraining. This process ensures that the automated digitization process adheres to high-quality standards and remains user-centric.

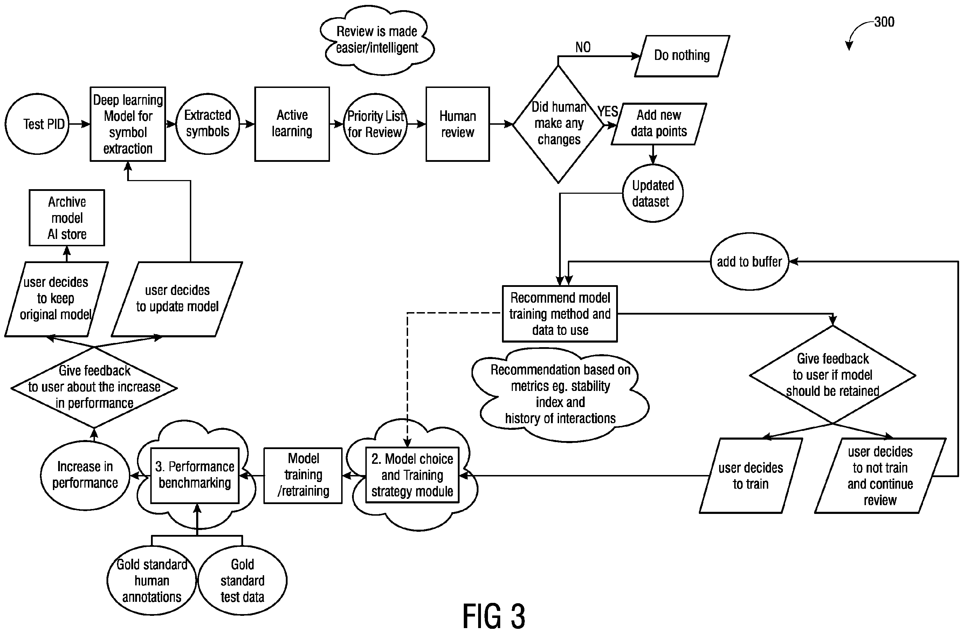

Referring now to FIG 3, illustrated is a flow diagram of a process (as represented by reference numeral 300) for automated digitization of schematic diagrams, in accordance with one or more embodiments of the present invention. The process 300 represents a workflow for the scalable and adaptive digitization of engineering schematic diagrams incorporating a human-in-the-loop approach. The process begins with the object detection model, such as EfficientDet or Yolo, which is initially trained with a set of annotated or synthetic data. This model serves as the foundation for the initial identification of schematic symbols within a test schematic diagram input by a human expert. Once the test schematic diagram is processed by the symbol detection model, a first set of symbol extractions is generated. The accuracy of these extractions is then enhanced by an active learning component. This component selectively prioritizes the extracted symbols for review, focusing on those with a confidence score below a certain threshold, indicating the need for human expert verification.

The prioritized symbols are presented to the expert through a user interface, which is designed to support various forms of feedback. Through this interface, the expert can execute multiple actions: (i) Deletion of incorrectly detected symbols, removing false positives where the object detection model erroneously identified non-symbol elements as schematic symbols; (ii) Confirmation of true positives, where no action is taken on accurately detected and classified symbols; (iii) Correction of symbol categories, where the expert can alter the preliminary classification assigned to a detected symbol by the object detection model;(iv) Adjustment of symbol positions, allowing the expert to redefine the boundaries of detected symbols if they have been incorrectly placed or sized; (v) Addition of undetected symbols, enabling the expert to include symbols that the object detection model failed to detect.

After the expert completes the review and provides feedback, the system presents a recommendation for retraining the symbol detection model, which is designed to adapt performance of the model gradually to the specific domain, data, or customer requirements. This recommendation is based on the analysis of the feedback and the nature of data shifts, as indicated by metrics like PSI and FSI.

The expert is then given the option to accept or reject the recommendation for retraining. If accepted, the system proceeds with retraining the symbol detection model using the data prepared during the feedback analysis. The newly retrained model is subjected to performance benchmarking against gold-standard annotations or test data to validate its improved accuracy and reliability. If the recommendation is rejected, possibly due to insufficient resources or minor data shifts deemed non-critical at the time, the feedback data is stashed in a buffer. This buffered data is not lost; it is taken into account during subsequent review cycles, ensuring efficiency and preserving the re-trainability of the system for future updates.

Upon successful retraining and benchmarking, the system generates performance metrics that are communicated back to the expert. If the performance metrics indicate an increase in accuracy or an improvement in model performance, the expert can approve the deployment of the updated symbol detection model to replace the existing version. This ensures that the symbol detection model used by the system is always the most current and effective version, maintaining the integrity and efficacy of the automated digitization process.

The process 300 ends with the decision to either retain the original object detection model or to update the model with the retrained version, depending on the outcome of the benchmarking and the user's discretion. This iterative cycle of model application, human review, feedback analysis, and model retraining or updating ensures a continuous improvement loop, facilitating the progressive refinement of the object detection model for schematic symbol extraction and classification.

In the state-of-the-art, at the most basic level, schematic digitization is performed manually. It involves a domain expert and a drafter who use digital tools to do this. Some level of automation is bought in when a computer engineer is involved together with domain expert to encode domain knowledge to develop computer programs. Such processes have immense dependency on domain experts which is time consuming, expensive and not scalable. A layer of intelligence is added when the process of digitization is boosted by learning from known examples. This is done by including a ML engineer with the domain expert to curate the examples and train ML models for digitalization. Further another layer of intelligence can be added to take care of the bottlenecks of data and make solution scalable by having human in the loop feedback and model improvement. However, here the domain expert still curates data, the ML engineer trains model and deploys them but now the model predictions are enriched with expert feedback. The ML engineer then chooses the data and training approach to retrain the model, to update and improve the digitization models. But there is still heavy dependency on the domain expert for information curation and feedback, and on the ML engineer for model and data curation, as well as retraining and improvement of models throughout the lifecycle of the digitization process. This hinders the scalability and creates a load on the domain expert.

The method 100 of the present disclosure minimizes the domain experts work on information curation and eases the process of feedback. The method 100 proposes a recommendation engine that reduces the load of the ML engineer for the tasks of enriching the data and preparing the re-training data, model choice and retraining strategy decisions and model update activities. However, it still retains the decision of whether to retrain or not by presenting these options to a human authority. Thus, the method 100 provides automation strategy of the digitalization process. The method 100 provides active learning for reducing human effort in the review. The recommendation engine informs how the review has been i.e., how much information gain is achieved that will eventually lead to improvement in model performance. The model choice and training strategy process recommends the user to how to best capture the information in the symbol extraction framework so as to maintain the performance on the prior data as well as accommodate the new information from review and still generalise well on the used case. This is designed to intelligently choose the best and most efficient model type and training strategy to train it based on the footprint of interactions between the user and the framework, and information gain value obtained from the recommendation engine.

The method 100 maps the information to the type of information gain (Table 1) and map of information gain to the type of training strategy and model (Table 2). The different approaches to learning and model type range from active learning, different types meta learning, continual learning, and efficient DL which have different advantages based on factors such as resource consumption, training time, etc. This provides advice on choosing model and training strategy that ensures continual long-term learning with good generalisation, learns easily, faster and more efficiently. Further, the method 100 informs the user how changing the strategy based on the model choice and training strategy module advice has improved the model performance post which the user can replace the model in the symbol extraction setup with this new improved one or give choice to archive it in storage entities like AI store. The method 100 provides seamless integration of the above processes so that the user is presented with decision making that is relevant to his/her expertise while the underlying framework handles the task of monitoring and improving model performance and stability.

It may be appreciated that continuous improvement of machine learning models in production is inevitable (due to data shifts based on different clients, different industries etc.), data infidelity and even lack of data. The present method 100 aims to continuously bring the deployed model to a stable performance state with minimal human intervention. The proposed human-in-the-loop framework will enable models to improve while saving time and resources as often domain and AI experts are either busy or may not even be available. For sake of transparency, the final decision of model replacement is still vested with the human. The method 100 also addresses the issue of dealing with low-data regime that tends to bias initial production models. Thus, when the model encounters previously unseen data, it tends to underperform. Continuous improvement of model to adapt to various data distributions removes the bottleneck to have all the possible data to start the extraction process. This eventually enables the uninterrupted downstream ingestion of the digitalized data into tools like COMOS/Plantsight. The method 100 can ingest the human review into the systems, which makes the system improve further. The method 100 captures domain knowledge from reviewers/experts and combines it with the data knowledge thus acting as a knowledge pump that feeds this information to COMOS/Plantsight. This helps enrich the data in such products like COMOS/Plantsight or other analytical tools such as APS.

While working with different customers of the same domain, or more so in the case customers across domains, the present invention helps in accommodating to learn the changes while trying to learn same or similar patterns. This provides a distinct advantage for ingestion of digitalized data. Further, the method 100 minimizes the cognitive load of the human using our active learning framework for taking human inputs and for decision making based on the recommendation engine. This advantage is magnified during the digitalization of complex and dense diagrams. The method 100 considers stability index as well as human preferences based on history of prior interactions when coming up with recommendations, which is an improvement over recommendations solely on stability index. The proposed data buffer architecture ensures that if user rejects retraining due to any reason, the data could be optionally stashed away and bought up for model improvement at an appropriate time. This could avoid loss of valuable human inputs.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

Reference Numerals

| | | |
|---|---|---|
| method | | 100 |
| step | | 110 |
| step | | 120 |

(continued)

| | |
|---|---|
| step | 130 |
| step | 140 |
| step | 150 |
| step | 160 |
| step | 170 |
| system | 200 |
| bus | 202 |
| processing unit | 204 |
| memory unit | 206 |
| interface | 208 |
| database | 210 |
| input device | 212 |
| output device | 214 |
| object detection model training module | 216 |
| process | 300 |

**Claims**

1. A method (100) for automated digitization of schematic diagrams, the method (100) comprising:

   receiving a schematic diagram in a digital format, wherein the schematic diagram comprises a plurality of schematic symbols;

   processing the schematic diagram using an object detection model to extract a set of extracted schematic symbols, wherein each extracted schematic symbol is assigned a preliminary classification and a preliminary position in the schematic diagram by the object detection model, wherein the object detection model is trained on an initial training dataset, the initial training dataset comprising annotated schematic symbols, wherein each annotated schematic symbol is associated with a classification indicative of function of the annotated schematic symbol within a schematic diagram;

   displaying, via a user interface, the extracted schematic symbols overlaid on the schematic diagram, wherein the preliminary classifications and the preliminary positions of the extracted schematic symbols are visually indicated for user review;

   receiving user feedback on the extracted schematic symbols via the user interface, wherein the user feedback comprises corrections to the preliminary classifications, adjustments to the preliminary positions, identifications of incorrectly detected schematic symbols, deletions of symbol not in scope, and identifications of undetected schematic symbols by the object detection model;

   analysing the user feedback to quantify shift in data distribution compared to the initial training dataset;

   retraining the object detection model based on the user feedback and the shift in data distribution; and

   implementing the retrained object detection for digitization of schematic diagrams.

2. The method (100) of claim 1, wherein the step of analysing the user feedback to quantify shift in data distribution compared to the initial training dataset comprises computing at least one of Population Stability Index (PSI) and Feature Stability Index (FSI) to characterize the shift in data distribution.

3. The method (100) of claim 2, wherein the step of retraining the object detection model comprises complete retraining of the object detection model in response to a decrease in PSI, indicating substantial divergence from the initial training dataset.

4. The method (100) of claim 2, wherein the step of retraining the object detection model comprises retraining of one or more of last layers of the object detection model in response to a change in FSI, indicating user corrections of the classifications of detected symbols as compared to the initial training dataset.

5. The method (100) of claim 2, wherein the step of retraining the object detection model comprises selective fine-tuning of nodes or layers within the object detection model in response to a decrease in FSI, indicating localized shifts in the initial training dataset.

**6.** The method (100) of claim 2, wherein the step of retraining the object detection model comprises implementing meta-learning techniques, including at least one of model-based meta-learning, optimization-based learning, or metric-based learning, for tuning of the object detection model in response to a decrease in PSI, indicating presence of new schematic symbols as compared to the initial training dataset.

**7.** The method (100) of claim 1 further comprising:

benchmarking performance of the re-trained object detection model against a predefined standard model, to generate benchmarking results; and

presenting, via the user interface, the benchmarking results for user approval to deploy the re-trained object detection model.

**8.** The method (100) of claim 1, wherein the user interface is configured to support multiple types of user feedback, including deletion of incorrect schematic symbols, correction of categories of schematic symbols, correction of positions of schematic symbols, and addition of missed schematic symbols.

**9.** A system (200) comprising:

one or more processing units (204); and

a memory (206) unit communicatively coupled to the one or more processing units (204), wherein the memory (206) unit comprises an object detection model training module stored in the form of machine-readable instructions executable by the one or more processing units (204), wherein the object detection model training module (216) is configured to perform method (100) steps for automated digitization of schematic diagrams, according to any of the claims 1 to 8.

**10.** A computer-program product having machine-readable instructions stored therein, which when executed by one or more processing units (204), cause the one or more processing units (204) to perform a method (100) according to any of the claims 1 to 8.

100

```
┌─────────────────────────────┐
│            110              │
└─────────────────────────────┘
              │
              ▼
┌─────────────────────────────┐
│            120              │
└─────────────────────────────┘
              │
              ▼
┌─────────────────────────────┐
│            130              │
└─────────────────────────────┘
              │
              ▼
┌─────────────────────────────┐
│            140              │
└─────────────────────────────┘
              │
              ▼
┌─────────────────────────────┐
│            150              │
└─────────────────────────────┘
              │
              ▼
┌─────────────────────────────┐
│            160              │
└─────────────────────────────┘
              │
              ▼
┌─────────────────────────────┐
│            170              │
└─────────────────────────────┘
```

# FIG 1

```
┌──────────────────────────────────────────┐
│                                      200   │
│  ┌────────┐   ┌──┐   ┌──────────────────┐ │
│  │        │   │  │   │             206   │ │
│  │  204   │◄─►│  │◄─►│  ┌────────────┐   │ │
│  │        │   │  │   │  │    216     │   │ │
│  └────────┘   │  │   │  └────────────┘   │ │
│               │  │   └──────────────────┘ │
│  ┌────────┐   │  │   ┌────────┐           │
│  │  208   │◄─►│202│◄─►│  212   │           │
│  └────────┘   │  │   └────────┘           │
│               │  │                         │
│  ┌────────┐   │  │   ┌────────┐           │
│  │  210   │◄─►│  │◄─►│  214   │           │
│  └────────┘   └──┘   └────────┘           │
│                                            │
└──────────────────────────────────────────┘
```

# FIG 2

FIG 3

**EUROPEAN SEARCH REPORT**

Application Number

EP 24 17 3014

## DOCUMENTS CONSIDERED TO BE RELEVANT

| Category | Citation of document with indication, where appropriate, of relevant passages | Relevant to claim |
|---|---|---|
| X | US 2020/005094 A1 (SINHA BHASKAR [IN] ET AL) 2 January 2020 (2020-01-02) * paragraphs [0003], [0004], [0031] - [0033], [0041] - [0044], [0059], [0065] - [0066] * ----- | 1-10 |
| X | US 2020/387553 A1 (TYULYAEV ALEXEY VALERYEVICH [US] ET AL) 10 December 2020 (2020-12-10) * paragraphs [0014] - [0024], [0124] - [0129] * ----- | 1,8-10 |

**CLASSIFICATION OF THE APPLICATION (IPC)**

INV.
G06V10/764
G06N3/0895
G06N3/09
G06V30/41
G06V30/422

**TECHNICAL FIELDS SEARCHED (IPC)**

G06V
G06N

The present search report has been drawn up for all claims

| Place of search | Date of completion of the search | Examiner |
|---|---|---|
| The Hague | 30 September 2024 | Mukasa, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 3014

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2024

| Patent document cited in search report | Publication date | Patent family member(s) | | Publication date |
|---|---|---|---|---|
| US 2020005094 A1 | 02-01-2020 | CN | 112368657 A | 12-02-2021 |
| | | EP | 3814860 A1 | 05-05-2021 |
| | | US | 10671894 B1 | 02-06-2020 |
| | | US | 2020005094 A1 | 02-01-2020 |
| | | WO | 2020005541 A1 | 02-01-2020 |
| US 2020387553 A1 | 10-12-2020 | NONE | | |

For more details about this annex : see Official Journal of the European Patent Office, No. 12/82